# EUROPEAN PATENT APPLICATION

(11) **EP 2 301 824 A2**
(43) Date of publication of application: **30.03.2011**
(21) Application number: 10382255.7
(22) Date of filing: 23.09.2010
(51) Int. Cl.: B62D 25/04, B60R 22/24

(54) **B-Pillar with seatbelt anchoring for a vehicle**

(30) Priority: 25.09.2009 ES 200930459 U
(71) Applicant: Seat, S.A., 08760 Martorell, Barcelona (ES)
(72) Inventor: Tena Ruibal, Jaime, 08760, Martorell - Barcelona (ES); Martín Vazquez, Francisco, 08760, Martorell - Barcelona (ES); Gimenez Angeles, Jaume, 08760 -, Martorell - Barcelona (ES)
(74) Representative: Carvajal y Urquijo, Isabel

(57) **Abstract**

A central column for automobile bodywork comprising a grooved external vertical profile, an inside cover closing said grooved section and fixed along its edges to the external profile, and an intermediate reinforcing piece in the area where the seatbelt is moored. Said reinforcing piece is C-shaped, its lateral sectors each ending in outward facing opposite sectors approximately parallel to the central sector (9) of the C. Said opposite sectors rest longitudinally in the bottom of the grooved profile to which they are welded (14), while the central sector rests on the cover to which it is also welded (13). The central sector (9) and cover each have aligned openings (15) for mooring the seatbelt.

## Description

### Field of the invention

This invention refers to a central column for automobile bodywork, also known as the central strut or strut B of the bodywork, constituting a resistant element of the vehicle bodywork.

More specifically the central column in the invention is the type comprising a grooved external profile running vertically with the convexity toward the exterior, an internal cover closing longitudinally the concavity of the external profile and secured to the longitudinal edges of said external profile, and an intermediate reinforcing piece located in the seatbelt mooring zone.

### Background to the invention

In the known columns of the type described, the intermediate reinforcing piece generally consists of a plate which is usually thicker than the external profile and cover, and joined to the external profile cover or bottom.

With this construction, if a vehicle suffers a sharp head-on impact, maximum force is placed on the seatbelt and is transmitted to the belt mooring, usually separating the reinforcing plate from the profile or cover it is joined to, with the resulting danger that may mean, and the damage which may be caused to the column.

### Description of the invention

The subject of this invention is a column or central strut for automobile bodywork of the type described above, but designed to offer maximum safety for the seatbelt mooring, with no risk or minimum risk that the intermediate reinforcing piece may come away from the other column components, so providing maximum safety in the seatbelt mooring.

The invention is intended to optimise the security of the seatbelt mooring, using a reinforcement piece of special geometry which provides greater resistance and improves the link between said reinforcing piece and the car structure, to ensure that the force from the belt reaction in an accident is borne fully by the vehicle. Therefore, in addition to designing a new geometry for the reinforcing piece, the points and zones where that piece is secured to the vehicle structure are also enlarged so that the force from the seatbelt is distributed to various points on the central column.

The reinforcing piece in this invention is C-shaped, with the lateral sections both ending in opposite outward facing sectors parallel to the central part of the C. Said opposite sectors are supported longitudinally in the bottom of the grooved profile to which they are welded, while the central sector rests on the central column cover, to which it also welded. There are aligned openings on both central sector and cover, to secure the seatbelt.

Preferably, the lateral sectors of the C conforming the reinforcing piece will diverge slightly. Moreover, both the lateral sectors of the C-shaped reinforcing piece and the opposite sectors ending said lateral sectors will have a rear reinforcing wing.

The reinforcing piece will preferably have a nut welded in the central sector and on its outside surface, coinciding with the opening referred to above, in which to screw a threaded spindle to secure the seatbelt.

With this construction, in case of head-on impact demanding maximum force from the belt at the point where it is secured, that force will be distributed over three zones, one above and another below on the grooved profile of the column, aligned with the opposite sectors of the lateral parts of the C-shaped piece in the bottom of said grooved profile, and one in the centre, in line with the area of attachment of the central sector of the C on the central column cover. In this way, the force transmitted by the seatbelt in a head-on impact is distributed to the three zones mentioned, thereby relieving the cover on the strut or column where the reinforcing piece was usually welded.

On the column in the invention, the reinforcing piece is joined to two different elements or components of the vehicle structure, namely the external vertical profile and internal closing cover, all that to the special form of the C-shaped reinforcing piece.

On the column in the invention, as well as being joined to the central column closing cover, the reinforcing piece is connected to the grooved profile on said column which, in addition to being a genuine strut in the automobile structure, is far stronger that the internal cover.

In short, the force from the seatbelt mooring is not transmitted to the bodywork at just one point, but is transmitted through .three different areas, so reducing the concentration of forces while also ensuring that the belt holds whatever the magnitude of the impact.

### A brief description of the drawings

The attached drawings show, without limitation, a central column for automobile bodywork constructed according to the invention, where:
Figure 1 is a perspective view of the central column of a vehicle, from the interior, with the seatbelt mooring.
Figure 2 is a perspective view of a section of the central column, taken along line II-II in figure 1.
Figure 3 is a perspective view similar to figure 1, where the interior central column cover has been removed.
Figure 4 is a perspective view of the reinforcing piece which becomes part of the column in the invention.
Figure 5 is a transversal cross-section of the reinforcing piece taken along line V-V in figure 4.
Figure 6 is a diagrammatic longitudinal cross-section of the column taken along line VI-VI in figure 1.

### Detailed description of a design

The construction and characteristics of the central column in the invention are set out in greater detail below, with the aid of the drawings referred to above.

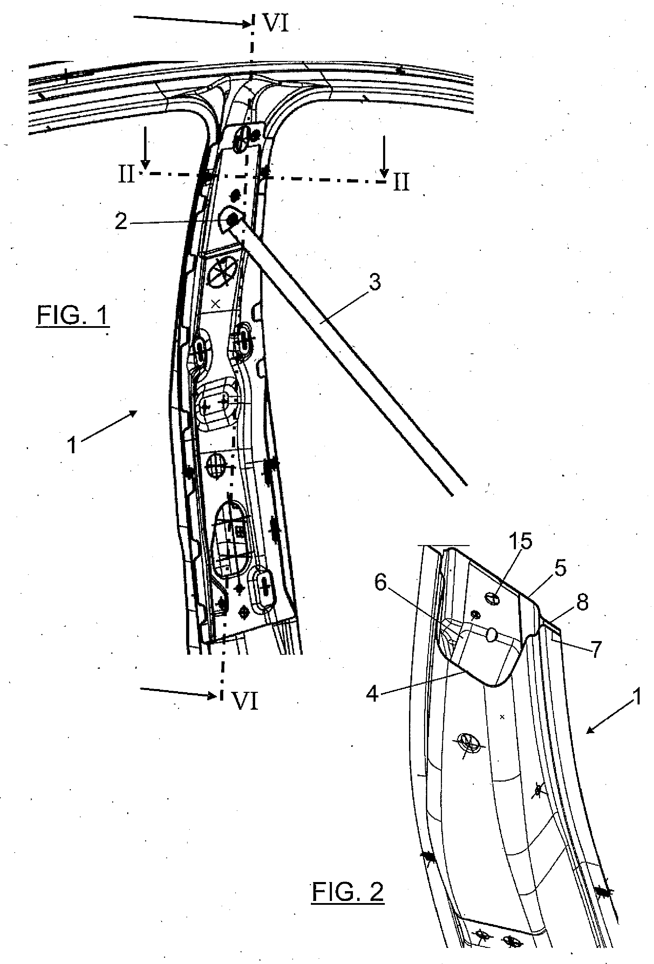

Figure 1 shows in perspective, from the interior of the automobile, a central column, generally marked with reference 1 and which includes a mooring 2 for the safety belt 3. Said column consists of an external grooved profile 4, an inside cover 5 closing the concavity of said grooved profile 4 longitudinally, and an intermediate reinforcing piece 6 installed in the bottom of said grooved profile 4 and the inside cover 5.

Said profile 4 and cover 5 have overlapping longitudinal strips 7 and 8 through which both components are spot welded together.

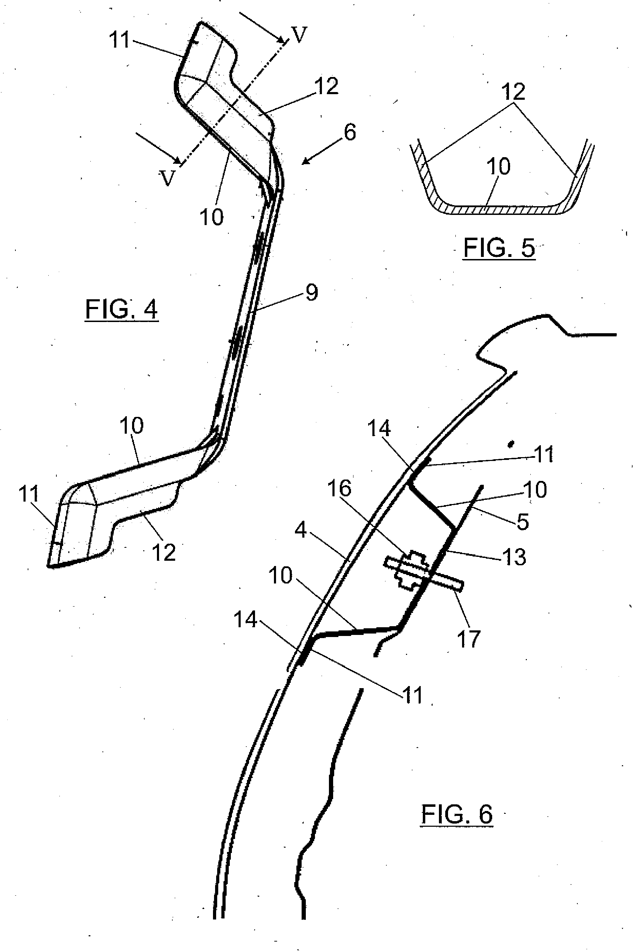

As can be seen better in figure 4, the intermediate reinforcing piece 6 is C-shaped, with a central sector 9 and lateral sectors 10 each ending in opposite sectors 11 facing outward parallel to the central sector 9.

Both side sectors 10 and the sectors 11 prolonging them have rear reinforcing wings 12, better seen in figure 5.

The reinforcing piece constructed as described is installed as can be seen in figures 2, 3 and 6 with the central sector supported externally on the interior cover 2, to which it is joined in welded spots or areas 13, while the opposite sectors 11 prolonging the lateral sectors 10 rest in the bottom of the grooved piece 4, to which they are spot welded 14.

Thus reinforcing piece 6 is attached to the two components of the vehicle's central column.

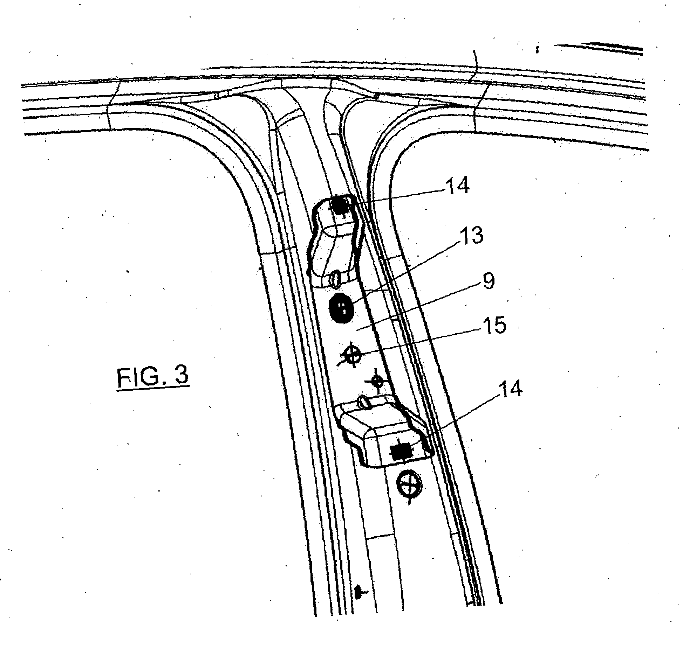

Central sector 9 of the reinforcing piece 6 and cover 5 each have aligned openings 15, figures 2 and 3, to moor the seatbelt. For this, a nut 16 is welded to reinforcing piece 6, coinciding with opening 15 and on the inside surface of central sector 9, figure 6, carrying a threaded spindle 17 to moor the seatbelt 3, figure 1.

Thus force transmitted by the seatbelt 3 is delivered to the external vertical profile 4 through upper and lower welding spots 14 and to the interior cover 5, through the union 13 between the central part of the reinforcing piece 6 and cover 2.

As can be better seen in figure 6, the lateral sectors 10 of the intermediate reinforcing piece 6 diverge slightly.

## Claims

1. A central column for automobile bodywork comprising a grooved external vertical profile, an interior cover closing said grooved section, fixed at its edges to the external profile, and an intermediate reinforcing piece in the area where the seatbelt is moored, **characterized in that** said reinforcing piece is C-shaped, its lateral sectors each ending in opposite, outward facing sectors, and approximately parallel to the central sector of said C; said opposite sectors resting longitudinally in the bottom of the grooved profile, to which they are welded, while the central sector rests on the cover, to which it is also welded, and said central sector and cover each incorporate aligned openings to moor the seatbelt.

2. A column according to claim 1, **characterized in that** the lateral sectors of the C-shaped reinforcing piece and the opposite sectors ending said lateral sectors have a rear reinforcement wing.

3. A column according to claim 1, **characterized in** taht the reinforcing piece contains a nut welded in the central sector on its.internal surface and aligned with said opening, to which a threaded spindle is fixed to moor the seatbelt.
